# EUROPÄISCHE PATENTSCHRIFT

(11) **EP 0 469 622 B1**
(45) Veröffentlichungstag und Bekanntmachung des Hinweises auf die Patenterteilung: **11.02.1998**
(21) Anmeldenummer: 91112983.1
(22) Anmeldetag: 01.08.1991
(51) Int. Cl.: H04L 25/49

(54) **Verfahren und Vorrichtung zur Demodulation eines biphasenmodulierten Signals**
Method and apparatus for demodulating a biphase-coded signal
Procédé et dispositif pour démoduler un signal à codage biphasé

(30) Priorität: 02.08.1990 DE 4024593
(43) Veröffentlichungstag der Anmeldung: 05.02.1992
(73) Patentinhaber: SGS-THOMSON MICROELECTRONICS GMBH, 85630 Grasbrunn (DE)
(72) Erfinder: Roither, Gerhard, W-8017 Ebersberg (DE)
(74) Vertreter: Klunker . Schmitt-Nilson . Hirsch

(56) Entgegenhaltungen:
- DE-A- 3 006 790
- DE-A- 3 046 658
- PATENT ABSTRACTS OF JAPAN vol. 8, no. 235 (E-275)(1672) 27. Oktober 1984 & JP-A-59 115 648
- SIEMENS COMPONENTS. Bd. 25, Nr. 3, Juli 1990, MUNCHEN DE Seiten 86 - 91;
- DIETZE: 'SDA 1000 decodes radio data signals'
- PROCEEDINGS OF CONVERGENCE 80 ( IEEE VEHICULAR TECHNOLOGY SOCIETY) Nr. E-25, 17. September 1980, DEARBORN, USA Seiten 1 - 8; FULLER UND EPLER: 'Overview of an A.M.P.S. mobile call processing system'

## Beschreibung

Die Erfindung betrifft ein Verfahren zur Demodulation eines mit einer binären Bitfolge biphasenmodulierten Signals, bei dem eine Bitwertänderung durch einen Phasensprung der Trägerschwingung dargestellt wird, sowie eine Vorrichtung zur Durchführung einer solchen Demodulation.

Bei einem mit einer binären Bitfolge biphasenmodulierten Signal findet pro Halbbit eine Phasenumkehr statt. Bei einem Wechsel der Binärwertigkeit der aufmodulierten Bitfolge tritt an der Stelle des Bitwechsels in der Trägerschwingung ein Phasensprung von 180° auf.

Ein mit einer binären Bitfolge biphasenmoduliertes Signal wird beispielsweise bei dem sogenannten RDS (Radio Data System) verwendet. Bei dem RDS werden von Rundfunksendern, welche RDS-Information abstrahlen, die Senderidentifikation, alternative Frequenzen des Senders, Programmtyp usw. übertragen. RDS ist kompatibel mit dem ARI- (Autofahrer-Rundfunk-Information)system, das eine Identifikation für Verkehrsinformationen sendende UKW-Sender ermöglicht. Näheres ist in der Druckschrift "Specifications of the Radio Data System RDS for VHF/FM sound broadcasting", Tech. 3244-E, Technical Center of the European Broadcasting Union Brüssel, März 1984, beschrieben.

Bei RDS wird senderseitig eine 1187,5 Hz Rechteckschwingung mit einer die RDS-Information enthaltenden Bitfolge phasenmoduliert. Beim Wechsel der Binärwertigkeit weist die Rechteckschwingung einen Phasensprung von 180° auf. Die phasenmodulierte Rechteckschwingung wird einer Tiefpaßfilterung unterzogen und dann einer Trägerschwingung aufmoduliert. In Übereinstimmung mit dem ARI-Systrem beträgt die Trägerfrequenz 57 kHz. Das RDS-Signal ist jedoch um 90° gegenüber dem ARI-Signal phasenverschoben. Daher wird die Phasenmodulationstiefe des RDS-Signals von dem ARI-Signal beeinflußt. Ist kein ARI-Signal vorhanden, weist das RDS-Signal gegenüber der Trägerphase eine Phasenverschiebung von abwechselnd + 90° und -90° auf. Ist ein ARI-Signal vorhanden, besitzt das RDS-Signal gegenüber der Trägerschwingung eine Phasenverschiebung von ± 8,9° < φ < ± 32°.

Nach der RDS-Modulation wird der 57 kHz-Träger unterdrückt. Das resultierende Signal wird einem Stereosignal mit einem Stereo-Pilotträger von 19 kHz hinzufügt. Das daraus entstehende Signal, das sogenannte MUX-Signal, das ein kombiniertes Stereo- und RDS-Informationssignal darstellt, wird dann zu einem frequenzmodulierten Sendesignal mit der Trägerfrequenz des jeweiligen Senders verarbeitet.

Empfangsseitig, beispielsweise in einem Autoradio, wird mit Hilfe eines Quarzosillators und einer digitalen "Costas-Loop" der 57 kHz-Träger regeneriert. Die Wiedergewinnung der RDS-Information erfolgt herkömmlicherweise durch einen Vergleich der Phase des empfangenen RDS-- Signals mit der Phase der empfangsseitig regenerierten 57 kHzTrägerschwingung.

Bei der empfangsseitigen Regenerierung des 57 kHz-Trägers erfolgt eine Synchronisation der empfangsseitig erzeugten Trägerschwingung mit dem,empfangenen RDS-Signal. Aufgrund von Störungen auf dem Übertragungsweg zwischen Sender und Empfänger, beispielsweise durch Reflexionen an Gebäuden, kann das empfangene RDS-Signal mit einem Phasenfehler behaftet sein. Da zur empfangsseitigen Regenerierung des 57 kHz-Trägers das empfangene RDS-Signal herangezogen wird, erscheinen solche auf der übertragungsstrecke entstandenen Phasenfehler in der regenerierten Trägerschwingung. Wenn das RDS-Signal aufgrund der gleichzeitigen Aussendung eines ARI-Signals nur einen relativ kleinen Phasenhub aufweist, kann der durch Übertragungsfehler entstandene Phasenfehler in der regenerierten Trägerschwingung größer sein als der die RDS-Information enthaltende Phasenhub des empfangenen RDS-Signals. Der Vergleich der Phase des empfangenen RDS-Signals mit der Phase der solchermaßen phasenfehlerbehafteten regenerierten Trägerschwingung führt dann zu Fehlern in der Rückgewinnung der die RDS-Information enthaltenden RDS-Bitfolge. Denn die Phasensprünge in dem empfangenen RDS-Signal werden dann nicht alle erkannt.

Die RDS-Information wird in Informationspaketen von je 104 Bit übertragen, die sich aus vier Blöcken zu je 26 Bits zusammensetzen. Jeder Block setzt sich aus einem Informationswort mit 16 Bits und einem Prüfwort mit 10 Bits zusammen. Wenn auch nur ein Bit eines Informationspakets falsch wiedergewonnen wird, kann die gesamte Information des Informationspaketes falsch und somit unbrauchbar werden. Es ist daher äußerst wichtig, empfangsseitig jedes einzelne Bit des RDS-Signals korrekt wiederzugewinnen.

Bei der Offenlegungsschrift DE-A-3 006 790 geht es um digitale Nachrichtenübertragung und insbesondere um ein Verfahren zum Demodulieren eines Trägersignals, das mit digitalen Daten moduliert ist. In diesem Dokument wird jede Bitdauer in eine Anzahl von Bitteilen oder Integrationsintervallen unterteilt, wobei diese Anzahl gleich groß ist wie die Zahl der Halbwellen der Wechselspannung, die während einer Bitdauer auftreten.
Die in diesem Dokument beschriebene Demodulationsmethode eignet sich lediglich zur Erkennung einer ganz bestimmten Adresse, nicht aber zur Demodulation beliebiger Nachrichten oder Bitmuster.
Bei dem Dokument "Patent Abstract of Japan", vol. 8, no. 235 (E-275) (1672), 27. Oktober 1984 & JP-A-59 115 648, 4. Juli 1984, geht es um die Demodulation eines digitalen Signals, dessen Information in der speziellen Form der enzelnen Bits einer Bitfolge steckt, und zwar derart, daß in der zeitlichen Mitte eines jeden Bits, also am Übergang zwischen den beiden Halbbits des jeweiligen Bits, ein Übergang zwischen zwei voneinander verschiedenen (digitalen) Signalzustände auftritt. Diese Modulationsart entspricht dem sogenannten "Manchester-Code".

Der Erfindung liegt die Aufgabe zugrunde, ein Verfahren und eine Vorrichtung zur Demodulation eines mit einer binären Bitfolge biphasenmodulierten Signals verfügbar zu machen, die zu einer sicheren Rückgewinnung der aufmodulierten Bitfolge führt.

Eine verfahrensmäßige Lösung dieser Aufgabe ist im Anspruch 1 angegeben und in den Ansprüchen 2 bis 10 weitergebildet. Eine vorrichtungsmäßige Lösung ist in Anspruch 11 angegeben und in Anspruch 12 weitergebildet.

Bei der erfindungsgemäßen Methode wird die Tatsache, daß bei der Biphasenmodulation das modulierte Signal in der Bithälfte eines jeden Modulationsbits einen Phasensprung in Form einer Phasenspiegelung um den Phasenwinkel 0° aufweist, in der Form ausgenutzt, daß empfangsseitig für jedes Bit das relative Verhältnis zwischen der in der ersten Bithälfte auftretenden Phase und der in der zweiten Bithälfte auftretenden Phase gebildet wird. Das so gewonnene Phasenverhältnis erlaubt eine sichere Aussage über den Binärwert des jeweiligen Bits, für dessen Bithälften das Phasenverhältnis gebildet worden ist. Je nachdem, ob diese Verhältnisbildung einen größeren Phasenwert in der ersten oder in der zweiten Bithälfte ergibt, wird dem entsprechenden Bit der Binärwert "1" oder der Binärwert "0" zugeordnet.

Da erfindungsgemäß die Binärwert-Wiedergewinnung nur noch von dem relativen Phasenverhältnis zwischen erster und zweiter Bithälfte eines jeden Bit abhängt, nicht mehr jedoch von einem Vergleich der jeweiligen Phase mit einem absoluten Phasenwert, der fehlerbehaftet sein kann, führt die erfindungsgemäße Methode auch bei großen Phasenfehlern, die während der Übertragung zwischen Sender und Empfänger aufkommen können, zu einer sicheren Wiedergewinnung der senderseitig aufmodulierten Bitfolge.

Zur Bildung des Verhältnisses der in den beiden Bithälften auftretenden Phasen kann man einen Referenzphasenwinkel heranziehen, dessen Betrag so gewählt ist, daß er größer ist als der maximale Phasenwinkelhub des biphasenmodulierten Signals. Dabei wird in jeder Bithälfte des jeweils zu demodulierenden Bit der Abstand des Phasenwinkels des empfangenen Signals zu dem Referenzphasenwinkel bestimmt. Das Verhältnis der so gewonnenen Phasenwinkelabstände enthält dann die Information über den Binärwert des zugehörigen Bit.

Zur Erzeugung des Referenzphasenwinkels kann man die Phase der regenerierten Trägerschwingung heranziehen. Zu diesem Zweck wird die regenerierte Trägerschwingung um einen Umsetzwinkel phasenversetzt, der mindestens so groß ist wie die Summe aus dem maximalen Phasenhub des biphasenmodulierten Signals und dem maximal auftretenden Phasenfehler des empfangenen Signals. Das Phasenverhältnis zwischen erster und zweiter Bithälfte führt in diesem Fall selbst dann zu einer absolut sicheren Rückgewinnung der Bitfolge, wenn in dem übertragenen Signal Phasenfehler auftreten. Vorzugsweise wird ein Umsetzwinkel von 180° verwendet.

Findet eine Tiefpaßfilterung statt, wie es bei RDS senderseitig der Fall ist, bevor die phasenmodulierte Rechteckschwingung der Trägerschwingung aufmoduliert wird, weist das Modulationssignal empfangsseitig keinen rechteckigen, sondern einen in etwa sinusförmigen Phasenverlauf auf. Für diesen Fall wird vorzugsweise zur Bildung des Verhältnisses zwischen den Phasenwinkelverläufen in der ersten bzw. der zweiten Bithälfte eine Integrationsmethode herangezogen. Hierzu wird bevorzugterweise ein Referenzphasenwinkel in der oben erläuterten Weise herangezogen und getrennt in beiden Bithälften je die Fläche zwischen dem Phasenverlauf des empfangenen Signals und dem Verlauf des Referenzphasenwinkels gebildet. Die durch Integration in den beiden Bithälften je erhaltenen Flächen werden dann ins Verhältnis zueinander gesetzt und das resultierende Verhältnis bestimmt den Binärwert des zugehörigen Bit.

Besonders vorteilhaft ist es, hierfür eine Integrationseinrichtung heranzuziehen, die während der einen Bithälfte aufwärts und während der anderen Bithälfte abwärts integriert. Je nachdem, ob der am Bitende auftretende Integrationswert positiv oder negaitv ist, wird dem zugehörigen Bit der Binärwert "O" bzw. der Binärwert "1" zugeordnet.

Handelt es sich um ein analoges System, kann man die Integration mit einem Kondensator durchführen, der während der einen Bithälfte positiv und während der anderen Bithälfte negativ geladen wird. Das Vorzeichen der Kondensatorladung zum Zeitpunkt des Bitendes bestimmt dann den Binärwert des zugehörigen Bit.

Im Fall eines digitalen Systems wird erfindungsgemäß in besonders bevorzugter Weise ein Aufwärts/Abwärts-Zähler als integrierende Vorrichtung verwendet. Taktimpulse mit genügend hoher Frequenz werden während einer Bithälfte aufwärts und während der anderen Bithälfte abwärts gezählt. Je nachdem, ob der Zählwert am Bitende positiv oder negativ ist, wird dem zugehörigen Bit der eine oder der andere Binärwert zugeordnet.

Wenn, wie bei RDS, die Trägerfrequenz ein ganzzahliges Vielfaches der Bitfrequenz ist, wird als Zähltaktfrequenz ein Vielfaches der Trägerfrequenz gewählt. Erfindungsgemäß wird dann in besonders bevorzugter Weise während jeder Trägerschwingungsperiode ein Zeitfenster vorbestimmter Zeitdauer und mit vorbestimmter Phasenlage gegenüber der wiedergewonnenen Trägerschwingung gebildet. In jedem Zeitfenster werden während derjenigen Zeit, während welcher das empfangene biphasenmodulierte Signal einen vorbestimmten Binärwert aufweist, Zähltakte gezählt. Dabei werden alle während der einen Bithälfte gezählten Zähltakte akkumulierend aufwärts und alle während der anderen Bithälfte gezählten Zähltakte akkumulierend abwärts gezählt. Das Vorzeichen des am Bitende vorhandenen Zählwertes bestimmt dann wieder den Binärwert des rückgewonnenen Bit.

Im zeitlichen Bereich der Bitwechsel und der Bithälftenwechsel, die mit Nulldurchgängen des Phasenverlaufs des biphasenmodulierten Signals zusammenfallen sollen, können aufgrund von Störungen Unsicherheiten auftreten. Bei einer besonders bevorzugten Ausführungsform der Erfindung werden daher im zeitlichen Bereich der Bitwechsel und der Bithälftenwechsel Sperrfenster vorbestimmter Zeitdauer gebildet, die von der Bildung des Verhältnisses des Phasenverlaufs zwischen den beiden Bithälften ausgenommen werden. Im Fall digitaler Systeme, bei denen die Verhältnisbildung mit Hilfe einer Zählung, vorzugsweise einer Aufwärts/Abwärts-Zählung, durchgeführt wird, wird der Zählvorgang während der Dauer der Sperrfenster ausgesetzt.

Zur Durchführung der erfindungsgemäßen Demodulationsmethode wird im Fall eines digitalen Systems vorzugsweise ein Aufwärts/Abwärts-Zähler verwendet, der mit Hilfe eines der Bit-Frequenz entsprechenden, die Bithälftenwechsel angebenden Taktes periodisch zwischen Aufwärts- und Abwärtszählung umgeschaltet wird. Außerdem erfolgt bei jedem Bitwechsel eine Rücksetzung des Zählers. Dem Zähltakteingang des Zählers ist eine UND-Schaltung vorgeschaltet, die einen Eingang für Zählimpulse, einen Eingang für das biphasenmodulierte Signal, einen Eingang für das Zeitfenstersignal und gegebenenfalls einen Eingang für die Sperrfenstersignale aufweist. Dem Zählerausgang ist eine Bewertungsschaltung nachgeschaltet, die den bei Bitende vorhandenen Zählstand des Zählers auswertet und je nach dem Vorzeichen dieses Zählstands den Binärwert des demodulierten Bit bestimmt.

Die Erfindung wird nun anhand einer für RDS bestimmten Ausführungsform näher erläutert. In den Zeichnungen zeigen:
- Figur 1: ein Beispiel des Phasenverlaufs eines empfangsseitigen RDS-Signals und einiger empfangsseitiger digitaler Signalverläufe;
- Figur 2: weitere empfangsseitige digitale Signalverläufe;
- Figur 3: Signalverläufe, einschließlich dreier Beispiele von RDS-Signalen mit unterschiedlicher Phasenlage, während eines Teils einer ersten Bithälfte und eines Teils einer zweiten Bithälfte eines RDS-Bit; und
- Figur 4: eine erfindungsgemäße Vorrichtung zur Durchführung der Demodulationsmethode der Erfindung.

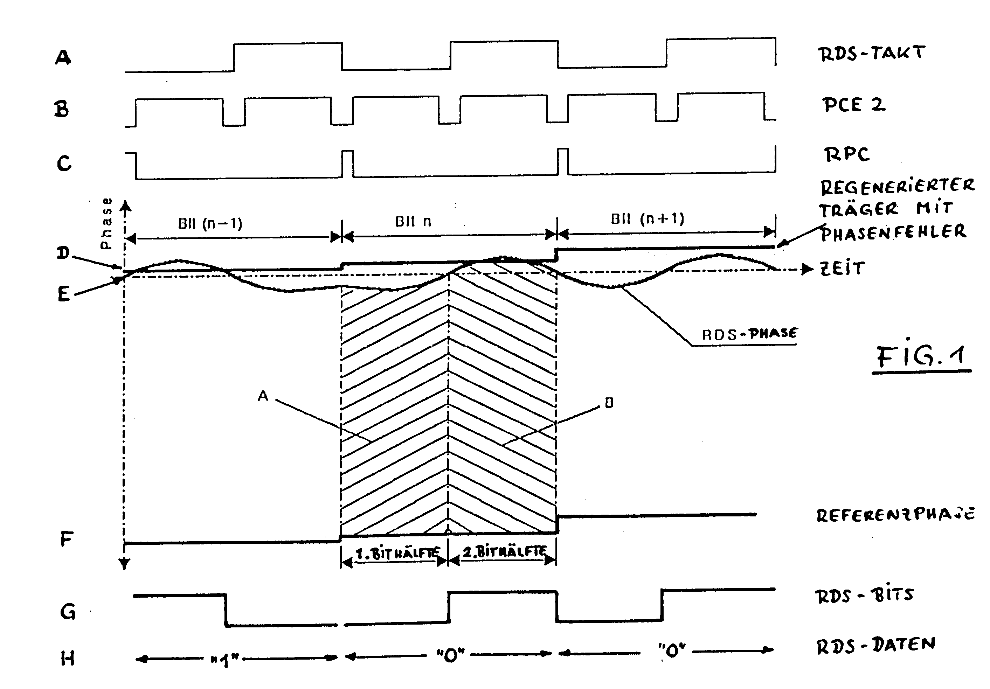

Fig. 1 zeigt Signalverläufe A bis G und eine Binärwertfolge H für einen beispielsweisen Ausschnitt eines RDS-Signals auf der Empfängerseite eines aus Sender und Empfängern bestehenden RDS-Systems.

Der Phasenverlauf E des RDS-Signals ist aufgrund von Tiefpaßfilterung im wesentlichen sinusförmig. Dargestellt sind drei Bits (n-1), n und (n+1). Die strichpunktiert dargestellte Zeitachse ist gleichzeitig die Linie des Phasenwinkels 0. Jedes Bit kann man in zwei Bithälften unterteilen, wobei der Phasenwinkel des RDS-Signals während der einen Bithälfte positiv und während der anderen Bithälfte negativ ist. Beim Bit (n-1) ist der Phasenverlauf in der ersten Bithälfte positiv und in der zweiten Bithälfte negativ. Bei den Bits n und (n+1) ist dies umgekehrt. Zwischen den Bits (n-1) und n tritt also ein Phasensprung auf, der einen übergang vom einen Binärwert zum anderen Binärwert signalisiert. Beispielsweise sei gemäß Darstellung gemäß H in Fig. 1 angenommen, daß einem Bit, dessen Phasenverlauf während der ersten Bithälfte positiv und während der zweiten Bithälfte negativ ist, der Binärwert "1" zugeordnet ist, Bits mit entgegensetztem Phasenverlauf dagegen der Binärwert "0". Unter dieser Annahme repräsentiert der in Fig. 1 gezeigte Ausschnitt des RDS-Signals die Bitfolge 1 0 0.

Der sinusartige Verlauf des RDS-Signals E ist durch Tiefpaßfilterung eines Digitalsignals entstanden, wie es in Fig. 1 als Signalverlauf G gezeigt ist. Während eines jeden Bithälftenwechsels wechselt das Signal G die Phase. Bei einer Bitfolge aus gleichbleibenden Binärwerten tritt ein solcher Phasensprung auch bei jedem Bitwechsel auf. Dort, wo zwei unterschiedliche Binärwerte aufeinanderstoßen, findet eine Abweichung hiervon statt. Dies führt im Signalverlauf G dazu, daß die erste Bithälfte des Bit n den gleichen Phasenwert wie die zweite Bithälfte des Bit (n-1) aufweist.

Verlauf D in Fig. 1 zeigt einen beispielsweisen Phasenfehlerverlauf des empfangsseitig regenerierten 57 kHz-Trägers. Würde man zur Wiedergewinnung der Binärwerte der RDS-Bitfolge die herkömmliche Methode einsetzen, bei welcher der RDS-Phasenverlauf in jeder Bithälfte eines jeden Bit mit der fehlerbehafteten Phasenlage der regenerierten Trägerschwingung verglichen wird, käme es für die Bits (n-1) und n zu richtigen Ergebnissen, nicht jedoch für Bit (n+1). Denn im letztgenannten Bit liegt der RDS-Phasenverlauf während beider Bithälften unterhalb des durch Phasenfehler entstandenen Phasenwinkels des regenerierten Trägers. In beiden Bithälften ist der RDS-Phasenverlauf kleiner als der Phasenwinkel des regenerierten Trägers. Die Phasenumkehr des RDS-Phasenverlaufs zwischen erster und zweiter Bithälfte wird daher nicht erkannt und die Demodulation der RDS-Bitfolge wird fehlerhaft.

Bei der erfindungsgemäßen Demodulationsmethode dagegen wird das Verhältnis zwischen dem RDS-Phasenverlauf während der ersten Bithälfte und dem RDS-Phasenverlauf während der zweiten Bithälfte gebildet und bewertet. Zu diesem Zweck wird ein Referenzphasenverlauf F benutzt, der durch Verschiebung des regenerierten Trägers um einen vorbestimmten Umsetzphasenwinkel von vorzugsweise 180° entsteht. Da aufgrund der Tiefpaßfilterung der RDS-Phasenverlauf in etwa sinusförmig ist, wird zur Ermittlung dieses relativen Verhältnisses eine Integrationsmethode eingesetzt. Diese kann man sich so vorstellen, daß die Flächen, die während der beiden Bithälften zwischen dem Referenzphasenverlauf F und dem RDS-Phasenverlauf E vorhanden sind, für die erste Bithälfte und für die zweite Bithälfte je getrennt durch Integration ermittelt und am Ende des zugehörigen Bits miteinander verglichen werden. Dies ist in Fig. 1 für das Bit n gezeigt. Durch die Integration werden die beiden Flächen A und B ermittelt und am Ende des Bit n miteinander verglichen. Ist Fläche A kleiner als Fläche B, wird bei der in Fig. 1 angenommenen Binärwertzuordnung von dem Binärwert "0" für das Bit n ausgegangen. Ist dagegen die Fläche A größer als die Fläche B, wird der Binärwert "1" zugeordnet, wie es für das Bit (n-1) der Fall wäre.

Solange man unter Berücksichtigung des maximalen Phasenhubs des RDS-Signals und der maximal auftretenden Phasenfehler den Phasenabstand zwischen der Null-Phase des RDS-Signals E und dem Referenzphasenverlauf F genügend groß wählt, führt diese Methode immer zur Rückgewinnung des richtigen Binärwertes, wobei sie gänzlich unabhängig von dem momentanen Phasenfehler ist.

Fig. 1 zeigt außerdem empfangsseitig erzeugte Signale A bis C, die alle durch Herabteilen einer empfangsseitig erzeugten Oszillatorfrequenz von 8,664 MHz gebildet werden. A zeigt einen RDS-Takt mit der Frequenz 1187,5 Hz, die der Bitfolgefrequenz der RDS-Bitfolge entspricht. A ist gleichzeitig ein Aufwärts/Abwärts-Umschaltsignal für einen Zähler 25 (Fig. 4). B zeigt ein Sperrfenstersignal PCE2. C zeigt ein Reset- oder Rücksetzsignal RPC für den Zähler 25. Die Funktion dieser Signale wird später erläutert.

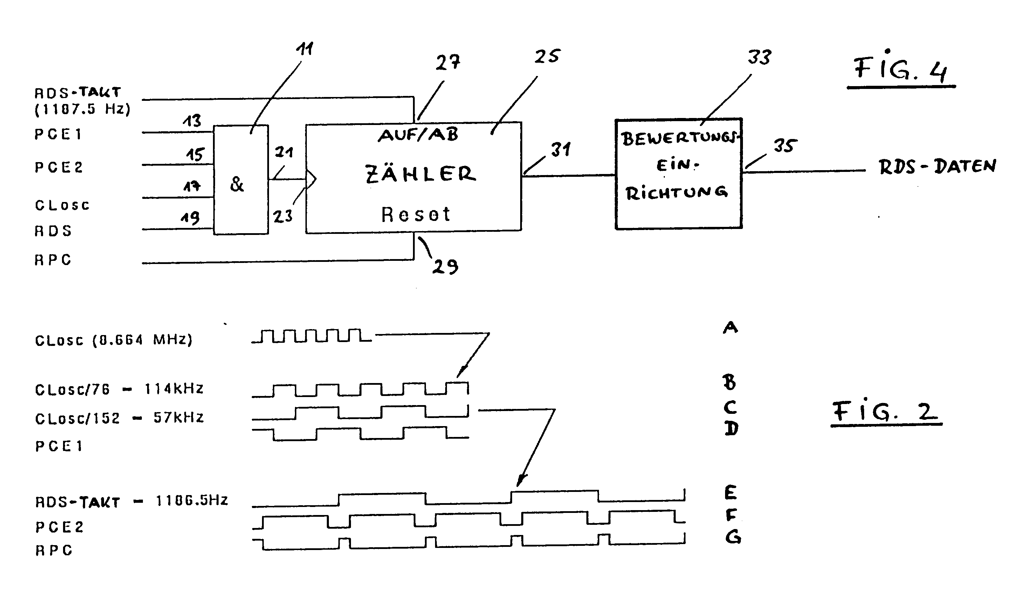

Fig. 2 zeigt Signalverläufe A bis G. A zeigt das bereits erwähnte Oszillatorsignal mit einer Frequenz von 8,664 MHz. Durch Herabteilung des Oszillatorssignals A entstehen Rechtecksignale gemäß den Verläufen B und C mit einer Frequenz von 114 kHz bzw. 57 kHz. Das Signal C mit der Frequenz 57 kHz bildet den empfangsseitig regenerierten Träger. Signalverlauf D zeigt ein Zeitfenstersignal PCE1, das die Trägerfrequenz 57 kHz aufweist, jedoch gegenüber dem regenerierten Träger C um 90° phasenverschoben ist.

Fig. 2 zeigt außerdem Signalverläufe E bis G, die mit den Signalverläufen A bis C in Fig. 1 übereinstimmen.

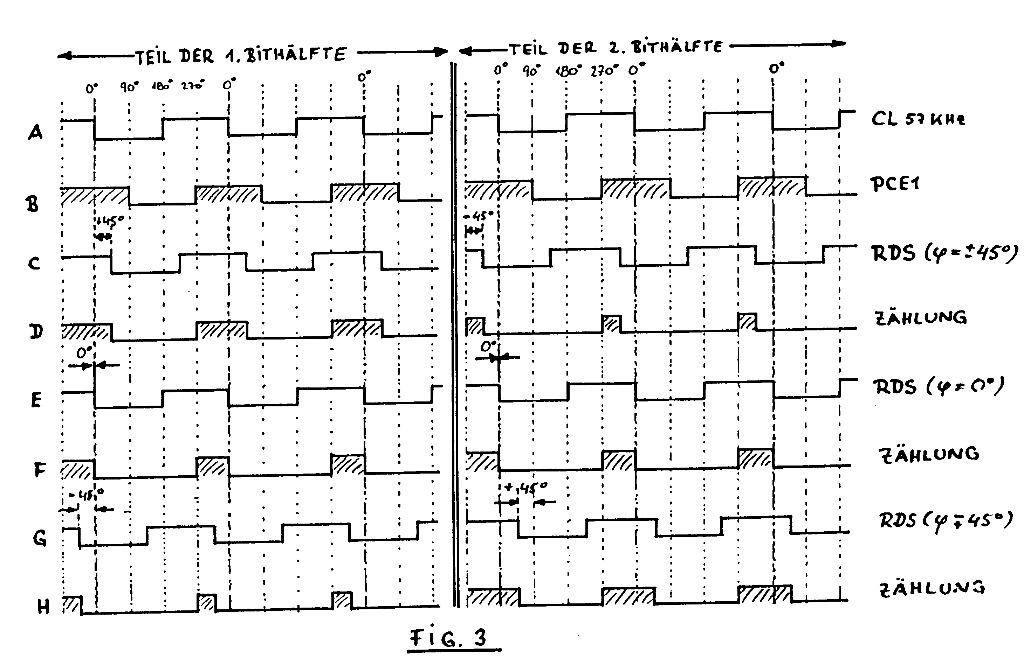

Fig. 3 zeigt Ausschnitte aus den beiden Bithälften eines einzigen RDS-Bit für verschiedene Phasenlagen des empfangenen RDS-Signals gegenüber dem 57 kHz-RDS-Träger.

Signalverlauf A zeigt den RDS-Träger. Da die 57 kHz des RDS-Trägers das 48-fache der 1187,5 Hz der RDS-Bitfolgefrequenz ausmachen, entfallen auf jede Bithälfte 24 Perioden des RDS-Trägers. In Fig. 3 sind davon in jeder Bithälfte knapp drei Perioden dargestellt.

Signalverlauf B in Fig. 3 zeigt das Zeitfenstersignal PCE1, das gegenüber dem RDS-Träger gleichfrequent, aber um 90° phasenverschoben ist. Die Signalverläufe C, E und G der Fig. 3 zeigen drei Beispiele für RDS-Signale, die gegenüber dem RDS-Träger einen Phasenunterschied von + 45° bzw. 0° bzw. -45° in der ersten Bithälfte und eine Phasenverschiebung von -45° bzw. 0° bzw. +45° in der zweiten Bithälfte aufweisen. Die Phasenverschiebungen von +45° bzw. -45° sind in Fig. 3 lediglich gewählt worden, weil sich diese Phasenwinkel in der Zeichnung leicht darstellen lassen. Wie bereits erwähnt, treten dann, wenn zusätzlich zur RDS-Modulation auch ARI-Modulation vorhanden ist, Phasenverschiebungen von höchstens + 32° bzw. -32° auf.

Fig. 4 zeigt eine bevorzugte Ausführungsform für einen erfindungsgemäß arbeitenden RDS-Demodulator. Eine UND-Schaltung 11 weist vier Eingänge 13, 15, 17 und 19 auf. Ein Ausgang 21 der UND-Schaltung 11 ist mit einem Zähltakteingang 23 eines aufwärts- und abwärtszählenden Zählers 25 verbunden. Der Zähler 25 weist zusätzlich einen Umschaltsteuereingang 27 und einen Rücksetzeingang 29 auf. An einen Ausgang 31 des Zählers 25 ist eine Bewertungseinrichtung 33 angeschlossen, an deren Ausgang 35 ist die demodulierte RDS-Bitfolge verfügbar.

Den Eingängen 13, 15, 17 und 19 der UND-Schaltung 11 werden das Zeitfenstersignal PCE1, das Sperrfenstersignal PCE2, das Oszillatorsignal CLosc bzw. das empfangene RDS-Signal zugeführt. Das Sperrfenstersignal PCE2 nimmt gemäß Signalverlauf B in Fig. 1 während der Bitwechsel und der Bithälftenwechsel vorübergehend einen niedrigen Signalwert an, so daß während dieser Zeiten die UND-Schaltung 11 gesperrt ist und keine Zähltaktsignale auf den Zähler 25 gelangen können. Außerhalb der Sperrfensterzeiten weist PCE2 einen hohen Signalwert auf, so daß die UND-Schaltung während dieser Zeiten freigegeben ist.

Wie der Signalverlauf B in Fig. 3 zeigt, öffnet das Zeitfenstersignal PCE1 die UND-Schaltung 11 jeweils 90° vor bis 90° nach dem Beginn einer neuen Periode des RDS-Trägers. Das Zeitfenstersignal PCE1 gibt während dieser Zeitintervalle die UND-Schaltung 11 frei. Die Taktimpulse Closc des empfangsseitigen Oszillators, die in Fig. 3 nicht dargestellt sind, gelangen somit durch die UND-Schaltung außerhalb der Sperrfensterzeiten dann zum Zähleingang 23 des Zählers 25 hindurch, wenn sowohl das Zeitfenstersignal PCE1 als auch das RDS-Signal hohen Potentialwert aufweisen. In Fig. 3 sind die zeitlichen Bereiche, während welcher das Zeitfenstersignal PCE1 eine Zählung ermöglicht, durch Schraffur gekennzeichnet. Außerdem sind in Fig. 3 Darstellungen D, F und H mit schraffierten Bereichen gezeigt, die anzeigen, wann der Zähler 25 bei den drei Beispielen C, E und G für das RDS-Signal Taktimpulse Closc als zu zählende Impulse erhält. Wie Fig. 3 zeigt, sind nur für den Fall, daß das RDS-- Signal keinen Phasenunterschied gegenüber dem regnerierten RDS-Träger aufweist, die Zählzeiten in den beiden Bithälften gleich. In den anderen Fällen dagegen sind die Zählzeiten in den beiden Bithälften unterschiedlich. Ist die Phasenverschiebung des RDS-Signals gegenüber dem RDS-Träger in der ersten Bithälfte +45° und daher in der zweiten Bithälfte -45°, ergibt sich gemäß Darstellung D während jeder Bitperiode in der ersten Bithälfte eine Zähldauer, die dreimal so groß ist wie die Zähldauer während einer Bitperiode der zweiten Bithälfte. In der ersten Bithälfte werden also pro RDS-Periode vom Zähler 25 dreimal so viel Zählimpulse gezählt wie in der zweiten Bithälfte. Darstellung H in Fig. 3 führt zu dem umgekehrten Ergebnis, da sie zu einem Beispiel eines RDS-Signals gehört, bei dem in der ersten Bithälfte eine Phasenverschiebung von -45° und in der zweiten Bithälfte eine Phasenverschiebung von +45° gegenüber dem wiedergewonnenen RDS-Träger vorhanden ist.

Die Zählimpulse, die während der einzelnen RDS-Perioden zum Zähler 25 gelangen, werden für jede Bithälfte akkumulierend gezählt, und zwar für die erste Bithälfte akkumulierend aufwärts und für die zweite Bithälfte akkumulierend abwärts. Das Verhältnis von aufwärtsgezählten zu abwärtsgezählten Zählimpulsen ist natürlich das gleiche als wenn in jeder Bithälfte nur während einer einzigen RDS-Periode gezählt worden wäre.

Zum Zeitpunkt des Wechsels von erster Bithälfte zur zweiten Bithälfte wird der Zähler 25 von Aufwärtszählen zu Abwärtszählen umgeschaltet, und zwar mit Hilfe des seinem Umschaltsteuereingang 27 zugeführten RDS-Taktes. Am Ende der zweiten Bithälfte und somit am Ende des zugehörigen Bits wird der Zähler 25 zurückgesetzt, und zwar mit Hilfe des seinem Rücksetzeingang 29 zugeführten Rücksetzsignals RPC. Bevor der Zähler 25 rückgesetzt wird, wird sein am Bitende erreichter Zählstand über seinen Ausgang 31 auf die Bewertungseinrichtung 33 gegebeben. Dort braucht lediglich festgestellt zu werden, ob der Zählendwert positiv oder negativ ist. Ist der Zählendwert positiv, ist das ein Zeichen dafür, daß die Fläche A in Fig. 1 größer war als die Fläche B, was bei dem in Fig. 1 angenommenen Beispiel einen Binärwert "0" des zugehörigen RDS-Bit bedeuten würde. Ist dagegen der Zählendwert des Zählers 25 negativ, bedeutet dies, daß die Fläche B größer war als die Fläche A, so daß der Binärwert "1" zuzuordnen ist. Am Ausgang der Bewertungseinrichtung 33 ist somit die senderseitig aufmodulierte RDS-Bitfolge verfügbar.

## Patentansprüche

1. Verfahren zur Demodulation eines mit einer binären Bitfolge biphasenmodulierten Signals, bei dem eine Bitwertänderung durch einen Phasensprung der Trägerschwingung dargestellt wird,
dadurch gekennzeichnet,
daß empfangsseitig für jedes Bit das relative Verhältnis zwischen dem während der ersten Bithälfte auftretenden Phasenwinkelverlauf und dem während der zweiten Bithälfte auftretenden Phasenwinkelverlauf gebildet und in Abhängigkeit davon, in welcher Bithälfte der größere Phasenwinkel festgestellt wird, dem jeweiligen Bit der Binärwert "0" oder der Binärwert "1" zugeordnet wird.

2. Verfahren nach Anspruch 1,
dadurch gekennzeichnet,
daß zur Bildung des Phasenwinkel-Verhältnisses in jeder Bithälfte der Abstand des Phasenwinkels des empfangenen Signals zu einem Referenzphasenwinkel bestimmt wird, dessen Betrag größer ist als der maximale Phasenwinkelhub des biphasenmodulierten Signals,
und daß das Verhältnis der beiden so gewonnenen Phasenwinkelabstände gebildet wird.

3. Verfahren nach Anspruch 1 oder 2, bei dem die Trägerschwingung senderseitig unterdrückt und empfangsseitig regeneriert wird und dabei mit einem Phasenfehler behaftet sein kann,
dadurch gekennzeichnet,
daß der Referenzphasenwinkel erhalten wird durch Umsetzen des Phasenwinkels der regenerierten Trägerschwingung um einen Umsetzwinkel, der mindestens so groß ist wie die Summe aus dem maximalen Phasenwinkelhub des biphasenmodulierten Signals und dem maximal auftretenden Phasenwinkelfehler.

4. Verfahren nach Anspruch 3,
dadurch gekennzeichnet,
daß ein Umsetzwinkel von 180° verwendet wird.

5. Verfahren nach einem der Ansprüche 1 bis 4,
dadurch gekennzeichnet,
daß zur Bildung des relativen Phasenwinkelverhältnisses während eines jeden Bit der Phasenwinkelverlauf in jeder der beiden Bithälften integriert und die Differenz zwischen beiden Integralen gebildet wird.

6. Verfahren nach Anspruch 5,
dadurch gekennzeichnet,
daß für die Bildung der beiden Integrale die Fläche (A, B) zwischen dem Referenzphasenwinkelverlauf (F in Fig. 1) und dem Phasenwinkelverlauf des biphasenmodulierten Signals (E in Fig. 1) während der jeweiligen Bithälfte gebildet wird.

7. Verfahren nach Anspruch 5 oder 6 für die Demodulation bei einem analogen System,
dadurch gekennzeichnet,
daß zum Integrieren eine Kapazität verwendet wird, die während der einen Bithälfte in positiver Richtung und während der anderen Bithälfte in negativer Richtung geladen wird, wobei das Vorzeichen der am Bitende vorhandenen Ladung den Binärwert des zugehörigen Bit bestimmt.

8. Verfahren nach Anspruch 5 oder 6 für die Demodulation bei einem digitalen System,
dadurch gekennzeichnet,
daß zum Integrieren eine Aufwärts/Abwärts-Zählung durchgeführt wird, derart, daß Taktimpulse (CLosc) während der einen Bithälfte aufwärts und während der anderen Bithälfte abwärts gezählt werden und der am Bitende vorhandene Zählwert den Binärwert des zugehörigen Bit bestimmt.

9. Verfahren nach Anspruch 8,
dadurch gekennzeichnet,
- daß die Trägerfrequenz (CL 57 kHz) ein ganzzahliges Vielfaches der Bitfrequenz (RDS-TAKT) und eine Zähltaktfrequenz (CLosc) ein Vielfaches der Trägerfrequenz (CL 57 kHz) ist,
- daß während jeder Trägerschwingungsperiode ein Zeitfenster (PCE1) vorbestimmter Zeitdauer und mit vorbestimmter Phasenlage gegenüber der regenerierten Trägerschwingung (CL 57 kHz) gebildet wird,
- daß in jedem Zeitfenster (PCE1) während der Zeit, während welcher das empfangene biphasenmodulierte Signal (RDS) einen vorbestimmten Signalwert aufweist, Zähltakte gezählt werden,
- und daß die während der einen Bithälfte gezählten Zähltakte aufwärts und die während der anderen Bithälfte gezählten Zähltakte abwärts gezählt werden.

10. Verfahren nach einem der Ansprüche 1 bis 9,
dadurch gekennzeichnet,
daß im zeitlichen Bereich der Bitwechsel und der Bithälftenwechsel Sperrfenster (PCE2) vorbestimmter Zeitdauer gebildet werden, deren Zeitintervalle von der Bildung des Phasenwinkelverhältnisses ausgenommen werden.

11. Verfahren nach Anspruch 10,
dadurch gekennzeichnet,
daß während der Sperrfenster (PCE2) eine Zählung der Zähltakte verhindert wird.

12. Vorrichtung zur Demodulation eines mit einer binären Bitfolge biphasenmoduliertes Signals, bei dem eine Binärwertänderung durch einen Phasensprung der Trägerschwingung dargestellt wird, als Teil eines digitalen Systems,
dadurch gekennzeichnet,
- daß ein aufwärts/abwärtszählender Zähler (25) vorgesehen ist, der mit einem Zählimpulseingang (23), einem Aufwärts/Abwärts-Umschaltsteuereingang (27), einem Rücksetzsteuereingang (29) und einem Zählerausgang (31) versehen ist,
- daß dem Zählimpulseingang (23) eine UND-Schaltung (11) vorgeschaltet ist, die einen Zähltakteingang (17), einen Signaleingang (19) und einen Zeitfenstereingang (15) aufweist,
- daß dem Zählerausgang (31) eine Bewertungseinrichtung (33) nachgeschaltet ist, die den bei Bitende vorhandenen Zählstand des Zählers (25) auswertet und je nach dem Vorzeichen dieses Zählstandes den Binärwert "1" oder den Binärwert "0" abgibt, wobei diese Binärwerte die demodulierte Bitfolge bestimmen,
- daß dem Aufwärts/Abwärts-Umschaltsteuereingang (27) ein in Frequenz- und Phasenlage der Bitfolge entsprechendes Signal (RDS-CL) zugeführt wird, derart, daß während der einen Bithälfte ein Aufwärtszählen und während der anderen Bithälfte ein Abwärtszählen gesteuert wird,
- daß dem Rücksetzeingang (29) bei jedem Bitwechsel ein Rücksetzsignal (RPC) zugeführt wird,
- daß dem Zähltakteingang (17) ein Zähltakt (CLosc) zugeführt wird, dessen Frequenz ein Vielfaches der Trägerfrequenz (CL 57 kHz) beträgt,
- daß dem Signaleingang (19) das biphasenmodulierte Signal (RDS) zugeführt wird,
- und daß dem Zeitfenstereingang (13) ein Zeitfenstersignal (PCE1) zugeführt wird, das für einen vorbestimmten zeitlichen Teil einer jeden Trägerschwingungsperiode in vorbestimmter Phasenlage gegenüber der Trägerschwingung (CL 57 kHz) die UND-Schaltung (11) freigibt.

13. Vorrichtung nach Anspruch 12,
dadurch gekennzeichnet,
daß die UND-Schaltung (11) zusätzlich einen Sperrsteuereingang (15) aufweist, dem im zeitlichen Bereich der Bitwechsel und der Bithälftenwechsel ein Sperrfenstersignal (PCE2) zugeführt wird, welches die UND-Schaltung (11) während der Dauer eines jeden Sperrfenstersignals sperrt.

14. Verfahren nach einem der Ansprüche 1 bis 11,
dadurch gekennzeichnet,
daß das biphasenmodulierte Signal ein RDS-Signal ist.

15. Vorrichtung nach Anspruch 12 oder 13,
dadurch gekennzeichnet,
daß das biphasenmodulierte Signal ein RDS-Signal ist.

## Claims

1. A method of demodulating a signal that is biphase modulated with a binary bit sequence, in which a change in bit value is represented by a phase jump of the carrier wave,
characterized in
that, on the receiving side and for each bit, the relative relationship between the phase angle pattern formed during the first half bit and the phase angle pattern formed during the second half bit is established and, depending on which half bit is ascertained to have the larger phase angle, either the binary value "0" or the binary value "1" is associated with the respective bit.

2. The method of claim 1,
characterized in
that the phase angle relationship in each half bit is established by determining the distance of the phase angle of the received signal from a reference phase angle which is greater in amount than the maximum phase angle deviation of the biphase modulated signal, and
that the relationship of the two phase angle distances thus obtained is established.

3. The method of claim 1 or 2, in which the carrier wave is suppressed on the transmitting side and regenerated on the receiving side and may then be inflicted with a phase error,
characterized in
that the reference phase angle is obtained by shifting the phase angle of the regenerated carrier wave by a shift angle that is at least as large as the sum of the maximum phase angle deviation of the biphase modulated signal and the maximum occurring phase angle error.

4. The method of claim 3,
characterized in
that a shift angle of 180° is used.

5. The method of any of claims 1 to 4,
characterized in
that the relative phase angle relationship is established by integrating during each bit the phase angle pattern in each of the two half bits and by forming the difference between the two integrals.

6. The method of claim 5,
characterized in
that the formation of the two integrals includes the formation of the area (A, B) between the reference phase angle pattern (F in Fig. 1) and the phase angle pattern of the biphase modulated signal (E in Fig. 1) during the respective bit half.

7. The method of claim 5 or 6 for demodulation in an analog system,
characterized in
that a capacitor is used for integration which during the one half bit is charged in positive direction and during the other half bit is charged in negative direction, the sign of the charge present at the bit end determining the binary value of the associated bit.

8. The method of claim 5 or 6 for demodulation in a digital system,
characterized in
that an up/down count is made for integration, such that clock pulses (CLosc) are counted up during the one half bit and down during the other half bit and the counting value present at the bit end determines the binary value of the associated bit.

9. The method of claim 8,
characterized in
- that the carrier frequency (CL 57 kHz) is an integer multiple of the bit frequency (RDS clock) and a counting clock frequency (CLosc) is a multiple of the carrier frequency (CL 57 kHz),
- that during each carrier wave period a time window (PCE1) of predetermined duration and predetermined phase position with respect to the regenerated carrier wave is formed (CL 57 kHz),
- that counting clocks are counted in each time window (PCE1) during the time during which the received biphase modulated signal (RDS) has a predetermined signal value,
- and that the counting pulses counted during the one half bit are counted up and the counting pulses counted during the other half bit are counted down.

10. The method of any of claims 1 to 9,
characterized in
that in the time range of the bit changes and half bit changes blocking windows (PCE2) of predetermined duration are formed whose time intervals are exempted from the formation of the phase angle relationship.

11. The method of claim 10,
characterized in
that counting of the counting clocks is prevented during the blocking windows (PCE2).

12. A device for demodulating a signal that is biphase modulated with a binary bit sequence, in which a change in binary value is represented by a phase jump of the carrier wave, as part of a digital system,
characterized in
- that an up/down counter (25) is provided having a counting pulse input (23), an up/down switching-over control input (27), a resetting control input (29) and a counter output (31),
- that the counting pulse input (23) has an AND circuit (11) connected upstream thereof, having a counting pulse input (17), a signal input (19) and a time window input (15),
- that the counter output (31) has an assessment means (33) connected downstream thereof for evaluating the count of the counter (25) present at the bit end and, depending on the sign of this count, outputting either the binary value "1" or the binary value "0", with these binary values determining the demodulated bit sequence,
- that the up/down switching-over control input (27) is fed with a signal (RDS-CL) corresponding to the bit sequence in frequency position and phase position, such that up counting is controlled during the one half bit and down counting is controlled during the other half bit,
- that a resetting signal (RPC) is fed to the resetting input (29) at every bit change,
- that the counting clock input (17) is fed with a counting clock (CLosc) whose frequency is a multiple of the carrier frequency (CL 57 kHz),
- that the signal input (19) is fed with the biphase modulated signal (RDS),
- and that the time window input (13) is fed with a time window signal (PCE1) which releases the AND circuit (11) for a predetermined time portion of each carrier wave period in a predetermined phase position with respect to the carrier wave (CL 58 kHz).

13. The device of claim 12,
characterized in
that the AND circuit (11) additionally comprises a blocking control input (15) fed in the time range of the bit changes and half bit changes with a blocking window signal (PCE2) which blocks the AND circuit (11) for the duration of each blocking window signal.

14. The method of any of claims 1 to 11,
characterized in
that the biphase modulated signal is an RDS signal.

15. The device of claim 12 or 13,
characterized in
that the biphase modulated signal is an RDS signal.

## Revendications

1. Procédé pour démoduler un signal codé en biphasé par un flux de bits binaire, dans lequel un changement de valeur de bit est représenté par un saut de phase de la porteuse,
caractérisé en ce que, au niveau de l'entrée et pour chaque bit, on établit le rapport relatif de l'évolution de l'angle de phase se produisant pendant la première moitié du bit et l'évolution de l'angle de phase se produisant pendant la deuxième moitié du bit, et en ce qu'on associe au bit la valeur binaire 0 ou la valeur binaire 1 selon le demi-bit dans lequel l'angle de phase est le plus élevé.

2. Procédé selon la revendication 1, caractérisé en ce que, pour établir le rapport d'angles de phase dans chaque demi-bit, on détermine l'écart de l'angle de phase du signal reçu par rapport à un angle de phase de référence dont la valeur est supérieure à l'amplitude de phase maximale du signal codé en biphasé, et en ce qu'on établit le rapport des deux écarts d'angles de phase ainsi déterminés.

3. Procédé selon la revendication 1 ou 2, dans lequel la porteuse est atténuée du côté de l'émission et régénérée du côté de la réception et peut par conséquent présenter des erreurs de phase,
caractérisé en ce que l'angle de phase de référence est obtenu par symétrie de l'angle de phase de la porteuse régénérée par rapport à un angle de symétrie et qui est au moins aussi grand que la somme de l'amplitude de phase maximale du signal codé en biphasé et des erreurs d'angle de phase maximales.

4. Procédé selon la revendication 3, caractérisé en ce qu'on utilise un angle de symétrie de 180°.

5. Procédé selon l'une quelconque des revendications 1 à 4, caractérisé en ce que, pour établir le rapport relatif d'angles de phase, on intègre l'évolution de l'angle de phase dans chacun des demi-bits de chaque bit et on établit la différence entre les deux intégrales.

6. Procédé selon la revendication 5, caractérisé en ce que, pour établir les deux intégrales, on détermine la surface (A, B) entre l'évolution de l'angle de phase de référence (F dans la figure 1) et l'évolution de l'angle de phase du signal codé en biphasé (E dans la figure 1) pendant le demi-bit correspondant.

7. Procédé selon la revendication 5 ou 6 pour effectuer la démodulation dans un système analogique, caractérisé en ce qu'on utilise une capacité pour effectuer l'intégration, qui est chargée dans un sens positif pendant le premier demi-bit et chargée dans un sens négatif pendant le deuxième demi-bit, le signe de la charge présente à la fin du bit déterminant la valeur binaire du bit correspondant.

8. Procédé selon la revendication 5 ou 6 pour effectuer la démodulation dans un système numérique, caractérisé en ce qu'on met en oeuvre un comptage/décomptage pour réaliser l'intégration, de manière que des impulsions d'horloge (CLosc) soient comptées en remontant pendant le premier demi-bit et comptées en descendant pendant le deuxième demi-bit, le compte subsistant à la fin du bit déterminant la valeur binaire du bit.

9. Procédé selon la revendication 8, caractérisé en ce que :
- la fréquence de porteuse (CL 57 kHz) est un multiple entier de la fréquence de bit (RDS-TAKT) et la fréquence de comptage (CLosc) est un multiple de la fréquence de porteuse (CL 57 kHz),
- pendant chaque période de la porteuse, on crée une fenêtre temporelle (PCE1) de durée prédéterminée et de position de phase prédéterminée par rapport à la porteuse régénérée (CL 57 kHz),
- dans chaque fenêtre temporelle (PCE1), on compte les impulsions d'horloge pendant le temps où le signal codé en biphasé reçu (RDS) a une valeur prédéterminée, et
- les impulsions comptées pendant le premier demi-bit sont comptées en remontant et les impulsions comptées pendant l'autre demi-bit sont comptées en descendant.

10. Procédé selon l'une quelconque des revendications 1 à 9, caractérisé en ce qu'on crée des fenêtres de blocage (PCE2) de durée prédéterminée au voisinage temporel des frontières de bit et des frontières de demi-bit, dont les durées ne sont pas prises en compte dans l'établissement du rapport d'angles de phase.

11. Procédé selon la revendication 10 caractérisé en ce que, pendant les fenêtres de blocage (PCE2), on empêche le comptage des impulsions de comptage.

12. Dispositif pour démoduler un signal codé en biphasé par un flux de bits binaire, dans lequel un changement de valeur binaire est représenté par un saut de phase de la porteuse, faisant partie d'un système numérique, caractérisé en ce que :
- on prévoit un compteur/décompteur (25) comprenant une entrée d'impulsions de comptage (23), une entrée de commutation en comptage/décomptage (27), une entrée de remise à zéro (29), et une sortie de compteur (31),
- un circuit ET (11) est connecté à l'entrée d'impulsions de comptage (23) et comporte une entrée d'horloge de comptage (17), une entrée de signal (19), et une entrée de fenêtre temporelle (15),
- un dispositif d'évaluation (33) est connecté à la sortie (31) du compteur, évalue le compte qui est présent dans le compteur (25) à la fin du bit et, en fonction du signe de ce compte, fournit la valeur binaire 1 ou la valeur binaire 0, ces valeurs binaires déterminant le flux de bits démodulé,
- un signal (RDS-CL) correspondant aux valeurs de fréquence et de phase du flux de bits est fourni à l'entrée de commutation en comptage/décomptage (27), de manière à provoquer un comptage remontant pendant le premier demi-bit et un comptage descendant pendant l'autre demi-bit,
- un signal de remise à zéro (RPC) est fourni à l'entrée de remise à zéro (29) à chaque changement de bit,
- des impulsions de comptage (CLosc), dont la fréquence est un multiple de la fréquence de porteuse (CL 57 kHz), sont fournies à l'entrée d'horloge de comptage (17),
- le signal codé en biphasé (RDS) est fourni à l'entrée de signal (19) et,
- un signal de fenêtre temporelle (PCE1) est fourni à l'entrée de signal de fenêtre temporelle (13) et libère le circuit ET (11) dans une position de phase prédéterminée par rapport à la porteuse (CL 57 kHz) pendant un intervalle de temps prédéterminé de chaque période de porteuse.

13. Dispositif selon la revendication 12, caractérisé en ce que le circuit ET (11) comporte une entrée supplémentaire de blocage (15) qui, dans les voisinages temporels des changements de bit et des changements de demi-bit, reçoit un signal de fenêtre de blocage (PCE2) qui bloque le circuit ET (11) pendant la durée de chaque signal de fenêtre de blocage.

14. Procédé selon l'une quelconque des revendications 1 à 11, caractérisé en ce que le signal codé en biphasé est un signal RDS.

15. Dispositif selon la revendication 12 ou 13, caractérisé en ce que le signal codé en biphasé est un signal RDS.
